# EUROPEAN PATENT SPECIFICATION

(11) **EP 2 457 711 B1**
(45) Date of publication and mention of the grant of the patent: **17.08.2016**
(21) Application number: 09847470.3
(22) Date of filing: 22.07.2009
(51) Int. Cl.: B29C 44/12, B65D 81/38

(54) **MANUFACTURING METHOD OF CONTAINER AND CONTAINER MANUFACTURED THEREOF**
VERFAHREN ZUR HERSTELLUNG EINES BEHÄLTERS UND DAMIT HERGESTELLTER BEHÄLTER
PROCÉDÉ DE FABRICATION D UN RÉCIPIENT ET RÉCIPIENT AINSI FABRIQUÉ

(43) Date of publication of application: 30.05.2012
(73) Proprietor: Rich Cup Bio-Chemical Technology Co., Ltd., Taichung (TW)
(72) Inventor: CHANG, Sheng-Su, Taichung City Taiwan 408 (CN); CHANG, Ching-Wen, Taichung City Taiwan 408 (CN)
(74) Representative: Lang, Christian
(86) International application number: PCT/CN2009/072868
(87) International publication number: WO 2011/009235

(56) References cited:
- EP-B1- 0 765 821
- WO-A1-2008/144958
- WO-A1-2008/144958
- CN-A- 1 210 802
- CN-A- 100 999 120
- JP-A- H0 780 979
- JP-A- 2002 068 199
- JP-A- 2008 132 780

## Description

### BACKGROUND OF THE INVENTION

### Field of the Invention

The present invention relates to a container manufacturing method according to the preamble of claim 1 and the container manufactured thereof, in particular to the container which is formed with foam layer on the surface thereof. A method according to the preamble of claim 1 and a respective container are known from WO 2008/144958 A1.

### Description of the Prior Art

Conventional disposable container, such as disposable paper or plastic cup, is widely used in our daily life. Especially, drinks retailer usually sells fresh drinks contained in such disposable cups. These cups are usually printed with patterns to show the contents and/or marketing information.

In practical, the cup should be provided with heat isolation function in containing hot drink, or user would be burned.

Therefore, there are containers coated with foam layer to mitigate the heat conductance, as disclosed in Taiwan patent applications whose application no. are 94143974 and 96102426. Containers revealed in the mentioned applications are provided with foam layers directly coated on surfaces thereof. Moreover, a United State patent US 5,952,068 provides another cup whose surface is coated with binder firstly, and is coated with heat isolated layer consisting hollowed particles additionally.

In the patent documents mentioned above, containers are provided with heat isolation function. Nevertheless, another issue is raised in difficulties of printing on surface of the container. In Taiwan patent applications 94143974 and 96102426, material is blended with pigment before surface coating. Or, printing is processed after coating and foaming. However, quality and accuracy of printing would seriously diminished by roughened surface of foam layer. Boundary of the image would be vague and dulled. In addition, the image printed on the surface of the foam layer can build only planar image. On the other hand, United State patent US 5,952,068 also silences to how to make the patterns accurately print on a non-smooth surface, especially one with expandable layer. It is predictable that the printing problems would occur to the cup provided in US 5,952,068.

US 2010/0227088 A1 equally discloses a method for producing a container having heat preservation properties.

The present invention is, therefore, arisen to obviate or at least mitigate the above mentioned disadvantages.

### SUMMARY OF THE INVENTION

The main object of the present invention is to provide a manufacturing method of container which is full of stereoscopic effect.

To achieve the above and other objects, a manufacturing method of container of the present invention includes the following steps:
Material blending: preparing a coating material by mixing and blending a binder and a thermo-expandable powder consisting of a plurality of thermo-expandable microcapsules, each thermo-expandable microcapsule consisting of a thermoplastic polymer shell and a low-boiling-point solvent wrapped by the thermoplastic polymer shell, the binder being selected from a group consisting of polyvinyl acetate resin, ethylene vinyl acetate resin, polyurethane resin and a mixture thereof;
Coating: coating the coating material on a part of an outer surface of a substrate of the container to form a coated layer, at least one non-coated portion being formed on the container, the non-coated portion being defined by the coated layer; and
Foaming: heating the coated substrate till the coated layer foaming so that the coated layer becomes a foam layer, the non-coated portion being thus defined by the foam layer instead; a step between the coating step and the foaming step:
   drying: drying the coated layer at a temperature lower than a foaming point of the thermo-expandable microcapsules so that the coated layer adheres to the container and becomes a non-sticky coated layer, and
   wherein a figure is printed on the non-coated portion such that the foam layer has a printing figure, the figure of the non-coated portion and the figure of the foam layer are continuous.

Thus, the figure can be printed fine since the figure can be directly printed on plastic or paper substrate of the container. In addition, the bulged foam layer can enhance stereoscopic effect of the figure so as to emphasize the figure.

### BRIEF DESCRIPTION OF THE DRAWINGS

Fig. 1 is a flow chart of a method of the present invention;
Fig. 2 is a schematic drawing showing coating material which is formed with non-coated portion of a first embodiment of the present invention;
Fig. 3 is a profile showing a non-coated portion and a figure printed on the non-coated portion of the present invention;
Fig. 4 is a profile showing a coated layer and a figure of the present invention, wherein the figure is printed before coating;
Fig. 5 is a profile showing a coated layer and a figure of the present invention, wherein the figure is printed after coating;
Fig. 6 is a perspective drawing showing a container of the present invention;

Main components:
2:non-coated portion;
3:foam layer;
4: main body.

### DETAILED DESCRIPTION OF THE PREFERRED EMBODIMENTS

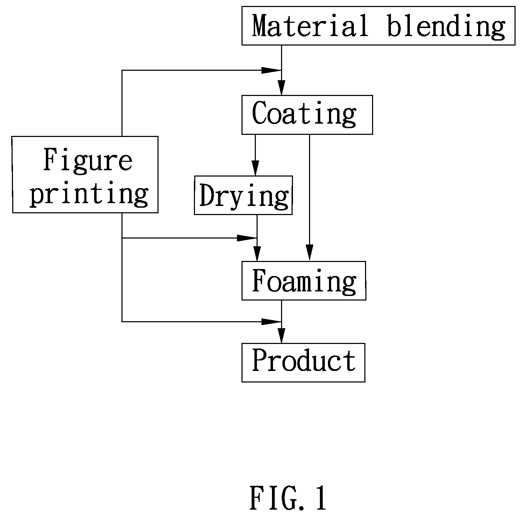

Please refer to Fig. 1. A manufacturing method of container includes the following steps:
Material blending: preparing a coating material by mixing and blending a binder and a thermo-expandable powder consisting of a plurality of thermo-expandable microcapsules, each of which consists of a thermoplastic polymer shell and a low-boiling-point solvent wrapped by the thermoplastic polymer shell. The binder is selected from a group consisting of polyvinyl acetate resin, ethylene vinyl acetate resin, polyurethane resin and a mixture thereof, and the binder can be either water soluble resin or oleoresin.
Coating: coating the coating material on a part of an outer surface of a substrate of a container to form a coated layer, and at least one non-coated portion being formed on the substrate, in which the non-coated portion is defined by the coated layer. The container can be made of paper, plastic, Styrofoam or the like, and which is adapted to be manufactured into the container. Said container may be finished product, such as a cup, a bowl, a disc or the like, or may be semi-finished product such as a paper reel and can be subsequently cut and assembled into a paper cup. Further, the coating material can be coated on the substrate of the container in the manner of rolling, spraying, dipping, printing, air knife, extruding, scraper applying or the like.

Foaming: heating the coated substrate and the coated layer till the coated layer foams so that the coated layer becomes a foam layer. Temperature of the heating is determined by material chosen. The thickness of the foam layer is at least twice than that of the coated layer. Higher expansion rate of the foam layer could induce greater the heat isolation function and more conspicuous stereoscopic vision.

A drying step can be further included in the present method, in which the drying step is to dry the coated layer at a temperature lower than a foaming point, where the foaming starts, of the thermo-expandable microcapsules so that the coated layer can adhere to the substrate and becomes a non-sticky coated layer. As such, the coated container can be stored for later use, facilitating the product stock controlling. More specifically, the drying step is between the coating step and the foaming step.

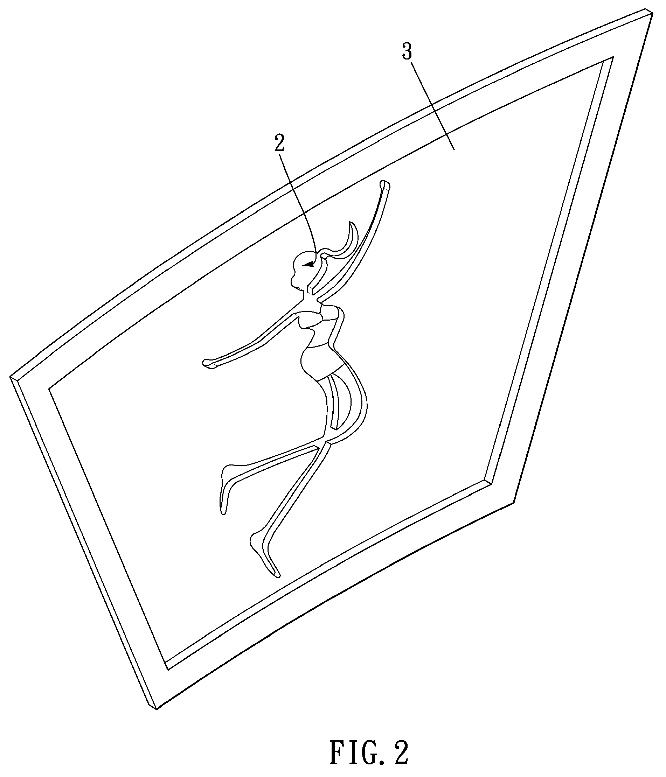

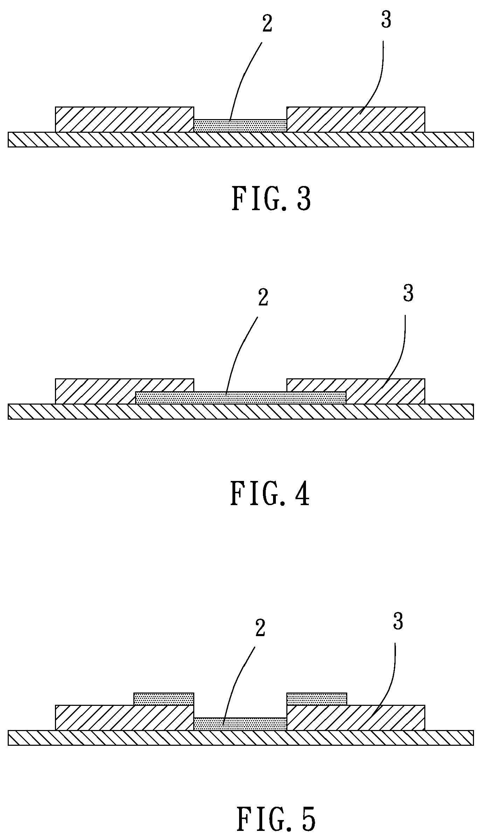

As shown in Fig. 2 and Fig. 3, the non-coated portion 2 is printed with figure, which may be image, pattern, characters, or the combination. The figure is not limited to be printed in only the non-coated portion. The foam layer 3 may have printing figure, also. In addition, figures of the non-coated portion 2 and the foam layer 3 may be continuous. The figures may be printed before the coating step, after the drying step and before the foaming step, or after the foaming step.

Please refer to Fig. 4. In the embodiment that printing is processed before coating, printing can be processed easily since the substrate of the container has smooth surface. In addition, the coating material may be chosen from transparent material. Thus, the figure appears partially hazily, and partially clearly. Figure in the non-coated portion is then further emphasized.

In the embodiment that printing is processed after drying and before foaming, the figure on the coated layer would slightly expand during foaming, and pigment of the figure would slightly permeate into the coating material. Thus, chromatic aberration between the figure of the non-coated portion and the figure of the foam layer would be created, inducing emphasis and stereoscope effects of the figure of the non-coated portion. Attraction of the container is then increased.

Please refer to Fig. 5. In the embodiment that printing is processed after foaming, the figure printed on the foam layer is vague and dulled. Hazy effect is then provided, inducing emphasis and stereoscope effects of the figure of the non-coated portion, also.

To elaborate, the invention intents to emphasis the figure printed on the container by bulged foam layer and recessed non-coated portion which are distributed appropriately. The figure is mainly or at least printed on the non-coated portion. Preferably, appearance of the non-coated portion corresponds to appearance of the figure printed on the non-coated portion. Thus, visual emphasis and stereoscope effects of the figure are enhanced.

Additionally, the pigment of the figure may be selected from thermochromic materials. If figure is printed on only foam layer, transformation of color of the figure would be unremarkable. The present invention has non-coated portion formed on the container. The pigment of the figure printed on the non-coated portion can proceed as a remarkable color transformation since the pigment can be heated or cooled by head conduction of the container. Thus, color transformation and heat isolation functions are provided simultaneously. Burning caused by hot drink is effectively prevented.

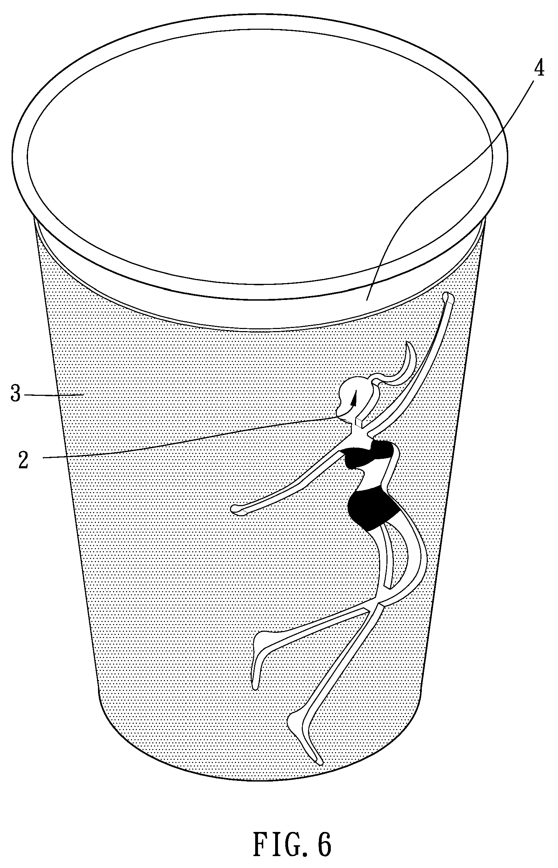

Please refer to Fig. 6. The container, such as a cup, includes a main body 4 and a base plate. The main body 4 is constructed by a substrate. The base plate is disposed at a bottom end of the main body 4. A foam layer 3 is disposed on an outer periphery of the main body 4. The foam layer 3 is formed with a portion hollowed out, which is a non-coated portion 2 of the foam layer 3. The non-coated portion 2 is printed with figure whose appearance corresponds to appearance of the non-coated portion 2. Thus, the figure and the non-coated portion are visually emphasized.

To conclude, the container is provided with visually emphasized figure without additional cost. Visual emphasis and stereoscope effects are achieved. Thus, the container is worthy for pattern design and valuable for marketing.

## Claims

1. A manufacturing method of container, comprising the following steps:
material blending: preparing a coating material by mixing and blending a binder and a thermo-expandable powder consisting of a plurality of thermo-expandable microcapsules, each thermo-expandable microcapsule consisting of a thermoplastic polymer shell and a low-boiling-point solvent wrapped by the thermoplastic polymer shell, the binder being selected from a group consisting of polyvinyl acetate resin, ethylene vinyl acetate resin, polyurethane resin and a mixture thereof;
coating: coating the coating material on a part of an outer surface of a substrate of the container to form a coated layer, at least one non-coated portion (2) being formed on the container, the non-coated portion (2) being defined by the coated layer; and
foaming: heating the coated substrate till the coated layer foaming so that the coated layer becomes a foam layer (3), the non-coated portion (2) being thus defined by the foam layer (3) instead;
**characterized by** a step between the coating step and the foaming step:
drying: drying the coated layer at a temperature lower than a foaming point of the thermo-expandable microcapsules so that the coated layer adheres to the container and becomes a non-sticky coated layer, and
in that a figure is printed on the non-coated portion (2) such that the foam layer (3) has a printing figure, the figure of the non-coated portion (2) and the figure of the foam layer (3) are continuous.

2. The manufacturing method of container of claim 1, wherein the figure is printed on the container before the coating material is coated on the container.

3. The manufacturing method of container of claim 1, wherein the figure is printed on the container after the coating material is coated on the container.

4. The manufacturing method of container of claim 1, wherein the figure is printed on the container before the coating material is coated on the container.

5. The manufacturing method of container of claim 1, wherein the figure of the non-coated portion (2) is printed to the non-coated portion (2) after the drying step and before the foaming step.

6. The manufacturing method of container of claim 1, wherein the figure of the non-coated portion (2) is printed together with the figure of the foam layer (3) after the drying step before the foaming step.

7. The manufacturing method of container of one of the claims 1 to 6, wherein an appearance of the non-coated portion (2) corresponds to an appearance of the figure printed on the non-coated portion (2).

8. A container, manufactured by the manufacturing method of container of one of the claims 1 to 7, the container comprising a main body (4) and a base plate, the main body (4) being constructed by a substrate, and the base plate being disposed at a bottom end of the main body (4).

## Patentansprüche

1. Herstellungsverfahren für einen Behälter, das die nachfolgenden Schritte umfasst:
Materialmischen: Vorbereitung eines Beschichtungsmaterials durch Mischen und Vermengen eines Bindemittels mit einem thermisch expandierbaren Pulver, das aus einer Vielzahl von thermisch expandierbaren Mikrokapseln besteht, wobei jede thermisch expandierbare Mikrokapsel eine thermoplastische Polymerhülle und ein Lösungsmittel mit niedrigem Siedepunkt umfasst, das von der thermoplastischen Polymerhülle umhüllt ist, wobei das Bindemittel aus einer Gruppe ausgewählt ist, die Polyvinylacetatharz, Ethylenvinylacetatharz, Polyurethanharz und eine Mischung daraus umfasst,
Beschichten: Aufbringen des Beschichtungsmaterials auf einen Teil einer Außenfläche eines Substrats des Behälters, um eine Überzugsschicht zu bilden, wobei wenigstens ein nicht-beschichteter Abschnitt (2) an dem Behälter gebildet wird, wobei der nicht-beschichtete Abschnitt (2) durch die Überzugsschicht definiert wird, und
Schäumen: Aufheizen des beschichteten Substrats bis die Überzugsschicht aufschäumt, sodass die Überzugsschicht eine Schaumschicht (3) wird, wobei der nicht-beschichtete Abschnitt (2) somit stattdessen durch die Schaumschicht (3) definiert wird,
**gekennzeichnet durch** einen Schritt zwischen dem Beschichtungsschritt und dem Schaumbildungsschritt:
Trocknen: Trocknen der Überzugsschicht bei einer Temperatur, die geringer ist als ein Schaumbildungspunkt der thermisch expandierbaren Mikrokapseln, sodass die Überzugsschicht an dem Behälter anhaftet und eine nicht - klebende Überzugsschicht bildet, und
**dadurch**, dass eine Abbildung auf den nicht-beschichteten Abschnitt (2) gedruckt wird, sodass die Schaumschicht (3) eine gedruckte Abbildung aufweist, wobei die Abbildung des nicht-beschichteten Abschnitts (2) und die Abbildung der Schaumschicht (3) kontinuierlich sind.

2. Herstellungsverfahren für einen Behälter nach Anspruch 1, bei welchem die Abbildung auf den Behälter gedruckt wird, bevor das Beschichtungsmaterial auf den Behälter aufgebracht wird.

3. Herstellungsverfahren für einen Behälter nach Anspruch 1, bei welchem die Abbildung auf den Behälter gedruckt wird, nachdem das Beschichtungsmaterial auf den Behälter aufgebracht wurde.

4. Herstellungsverfahren für einen Behälter nach Anspruch 1, bei welchem die Abbildung auf den Behälter gedruckt wird, bevor das Beschichtungsmaterial auf den Behälter aufgebracht wird.

5. Herstellungsverfahren für einen Behälter nach Anspruch 1, bei welchem die Abbildung des nicht-beschichteten Abschnitts (2) nach dem Trocknungsschritt und vor dem Schaumbildungsschritt auf den nicht-beschichteten Abschnitt (2) gedruckt wird.

6. Herstellungsverfahren für einen Behälter nach Anspruch 1, bei welchem die Abbildung des nicht-beschichteten Abschnitts (2) gemeinsam mit der Abbildung der Schaumschicht (3) nach dem Trocknungsschritt und vor dem Schaumbildungsschritt aufgedruckt wird.

7. Herstellungsverfahren für einen Behälter nach einem der Ansprüche 1 bis 6, bei welchem ein Erscheinungsbild des nicht-beschichteten Abschnitts (2) dem Erscheinungsbild der Abbildung entspricht, die auf den nicht-beschichteten Abschnitt (2) gedruckt ist.

8. Behälter, der nach dem Herstellungsverfahren für einen Behälter nach einem der Ansprüche 1 bis 7 hergestellt ist, wobei der Behälter einen Hauptkörper (4) und eine Basisplatte umfasst, wobei der Hauptkörper (4) durch ein Substrat ausgebildet ist, wobei die Basisplatte an einem unteren Ende des Hauptkörpers (4) angebracht ist.

## Revendications

1. Procédé de fabrication d'un conteneur comprenant les étapes suivantes :
malaxage de matériaux : préparation d'un matériau de revêtement en mélangeant et malaxant un liant et une poudre thermo-expansible consistant en une pluralité de microcapsules thermo-expansibles, chaque microcapsule thermo-expansible consistant en une enveloppe en polymère thermoplastique et
un solvant à faible point d'ébullition enveloppé par l'enveloppe en polymère thermoplastique, le liant étant sélectionné dans le groupe comprenant la résine d'acétate de polyvinyle, la résine d'éthylène-acétate de vinyle, la résine de polyuréthane et un mélange de celles-ci ;
revétement : revêtement du matériau de revêtement sur une partie d'une surface extérieure d'un substrat du conteneur pour former une couche revêtue, au moins une portion non revêtue (2) étant formée sur le conteneur, la portion non revêtue (2) étant définie par la couche revêtue et
moussage : chauffage du substrat revêtu jusqu'à ce que la couche revêtue mousse de telle manière que la couche revêtue devienne une couche de mousse (3), la portion non revêtue (2) étant donc définie par la couche de mousse (3) à la place,
**caractérisé par** une étape entre l'étape de revêtement et l'étape de moussage :
séchage : séchage de la couche revêtue à une température inférieure à un point de moussage des microcapsules thermo-expansibles si bien que la couche revêtue adhère au conteneur et devienne une couche revêtue non collante et
en ce qu'une silhouette est imprimée sur la portion non revêtue (2) de telle manière que la couche de mousse (3) a une silhouette d'impression, la silhouette de la portion non revêtue (2) et la silhouette de la couche de mousse (3) étant continues.

2. Procédé de fabrication d'un conteneur selon la revendication 1, la silhouette étant imprimée sur le conteneur avant que le matériau de revêtement soit revêtu sur le conteneur.

3. Procédé de fabrication d'un conteneur selon la revendication 1, la silhouette étant imprimée sur le conteneur après que le matériau de revêtement soit revêtu sur le conteneur.

4. Procédé de fabrication d'un conteneur selon la revendication 1, la silhouette étant imprimée sur le conteneur avant que le matériau de revêtement soit revêtu sur le conteneur.

5. Procédé de fabrication d'un conteneur selon la revendication 1, la silhouette de la portion non revêtue (2) étant imprimée sur la portion non revêtue (2) après l'étape de séchage et avant l'étape de moussage.

6. Procédé de fabrication d'un conteneur selon la revendication 1, la silhouette de la portion non revêtue (2) étant imprimée ensemble avec la silhouette de la couche de mousse (3) après l'étape de séchage avant l'étape de moussage.

7. Procédé de fabrication d'un conteneur selon l'une des revendications 1 à 6, une apparence de la portion non revêtue (2) correspondant à une apparence de la silhouette imprimée sur la portion non revêtue (2).

8. Conteneur fabriqué par le procédé de fabrication d'un conteneur selon l'une des revendications 1 à 7, le conteneur comprenant un corps principal (4) et une plaque de base, le corps principal (4) étant construit par un substrat et la plaque de base étant disposée à une extrémité de fond du corps principal (4).
